(19) **Europäisches Patentamt**
**European Patent Office**
**Office européen des brevets**

(11) **EP 4 661 335 A1**

(12) **EUROPEAN PATENT APPLICATION**

(43) Date of publication:
**10.12.2025 Bulletin 2025/50**

(51) International Patent Classification (IPC):
***H04L 9/08*** (2006.01)

(21) Application number: **24180024.2**

(52) Cooperative Patent Classification (CPC):
**H04L 9/0852**

(22) Date of filing: **04.06.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Adva Network Security GmbH
12489 Berlin (DE)**

(72) Inventors:
• **BERL, Jonas
12489 Berlin (DE)**
• **FEHENBERGER, Tobias
12489 Berlin (DE)**

(74) Representative: **Bratovic, Nino Maria
Bratovic IP
Lissi-Kaeser-Straße 20
80797 München (DE)**

(54) **CONTINUOUS-VARIABLE QUANTUM KEY DISTRIBUTION RECEIVER AND METHOD FOR CALIBRATION THEREOF**

(57) The invention provides an CV-QKD receiver (100) and a method of continuous-variable quantum key distribution, CV-QKD, receiver calibration, comprising steps of:
- providing (S100) a CV-QKD receiver (100) configured for receiving a quantum key transmission (QKT), in which calibration periods (CP) with a duration LC and quantum transmission periods (QTP) with a duration LQ alternate;
- providing (S200) a worst-case noise drift value, WCNDV, of a noise metric;
- determining (S300) in each calibration period (CP) a calibration period noise value, CPNV, for the noise metric based on a current state of the CV-QKD receiver (100);
- calculating (S400), for each quantum transmission period (QTP), a total noise estimate value, TNEV, to which both the worst-case noise drift value, WCNDV, and the calibration period noise value, CPNV, from the current calibration period (CP) contribute, and
- computing (S500) a secret key rate, SKR, using the calculated total noise estimate value, TNEV.

Fig. 1

**Description**

FIELD OF THE INVENTION

The present invention relates to a continuous-variable quantum key distribution, CV-QKD, receiver, and a method of calibration of such a CV-QKD receiver. The method provides an improved balance between security and efficiency.

BACKGROUND OF THE INVENTION

A typical quantum key distribution, QKD, protocol (or: method) comprises, or consists of, three phases: quantum key transmission, reconciliation/error correction, and privacy amplification. The main performance metrics of a quantum key distribution, QKD, protocol or system are the maximum transmission distance (or: reach), and the secret key rate, SKR. The secret key rate, SKR, indicates the amount of secret information that is distilled by the transmitting entity (commonly designated as "A" or "Alice") and the receiving entity (commonly designated as "B" or "Bob").

Continuous-variable quantum key distribution, CV-QKD, is a promising variant in which the quantum information is coded in continuous variables, for example in amplitudes and phase quadratures of an optical field. Some basic features of CV-QKD are described in the scientific publication by N. Jain et al., "Practical continuous-variable quantum key distribution with composable security", published August 12, 2022, in Nature Communications (2022)13:4740, retrievable at https://doi.org/10.1038/s41467-022-32161-y, hereafter cited as "Jain et al.".

Specifically CV-QKD with Gaussian modulation is described in detail in F. Laudenbach et al., "Continuous-Variable Quantum Key Distribution with Gaussian Modulation - The Theory of Practical Implementations", arXiv:1703.09278v3 of 10 May 2018, hereafter cited as "Laudenbach et al.".

A particular feature of quantum communication is that the quantum channel is considered to be insecure, meaning that an attacker (commonly designated as "Eve", for "eavesdropper") can access it and keep or modify parts of the transmitted information. However, such attempts change the transmitted quantum key transmission signal itself, introducing additional noise and/or loss to the quantum transmission.

In continuous-variable quantum key distribution, CV-QKD, a reliable estimation of the noise power in the quantum signal is therefore essential for security. For a given security level, parametrized by a security parameter (typically designated as $\varepsilon$), it is desired to maximize the secret key rate, SKR, and the transmission distance (or: reach). In a practical application of CV-QKD, in addition to theoretical models and proofs, also the state of the CV-QKD receiver plays a role. This necessitates CV-QKD receiver calibration, and raises the question of how long any specific calibration can be deemed to be valid. An experimental investigation of temporal receiver noise stability of a CV-QKD receiver is provided in S. van der Heide et al., "Receiver Noise Stability Calibration for CV-QKD", 2023 Optical Fiber Communications Conference and Exhibition (OFC), San Diego, CA, USA, 2023, pp. 1-3, doi: 10.1364/OFC.2023.W2A.37, hereafter cited as "van der Heide et al.".

The interrelation between noise and the secret key rate, SKR, is discussed, for example, in A. Leverrier et al., "Finite-size analysis of continuous-variable quantum key distribution", arXiv:1005.0339v2 of 4 May 2010, hereafter cited as "Leverrier et al.".

SUMMARY OF THE INVENTION

It is an objective of the present invention to provide an improved CV-QKD receiver, and an improved method of calibration of such a CV-QKD receiver.

These objectives are fulfilled by the subject-matter of the independent claims.

Thus, according to a first aspect of the present invention, a method of continuous-variable quantum key distribution, CV-QKD, receiver calibration is provided, comprising steps of:

- providing a CV-QKD receiver configured for receiving a quantum key transmission, in which calibration periods with a duration LC and quantum transmission periods with a duration LQ alternate;
- providing a worst-case noise drift value, WCNDV, of a noise metric;
- determining in each calibration period a calibration period noise value, CPNV, for the noise metric based on a current state of the CV-QKD receiver;
- calculating, for each quantum transmission period, a total noise estimate value, TNEV, to which both the worst-case noise drift value, WCNDV, and the calibration period noise value, CPNV, from the current calibration period (i.e. the calibration period immediately preceding the quantum transmission period for which the TNEV is calculated) contribute, and
- computing a secret key rate, SKR, using the calculated total noise estimate value, TNEV.

In some advantageous embodiments, refinements, or variants of embodiments, the method further comprises CV-QKD-receiver-side privacy amplification based on the computed secret key rate, SKR.

In some advantageous embodiments, refinements, or variants of embodiments, the method comprises the further steps of:

- providing long-term noise statistics for the provided CV-QKD receiver; and
- providing a desired security parameter value $\varepsilon$.

Providing the worst-case noise drift value, WCNDV, preferably comprises calculating (or: choosing) the worst-case noise drift value, WCNDV, such that the difference between two consecutive noise determinations for the calibration period noise value, CPNV, over a drift time with a predetermined duration (preferably the duration LQ) or less only exceeds the determined worst-case noise drift value, WCNDV, based on the provided long-term noise statistics with a probability of ε or lower. Since the duration LQ is the duration of the quantum transmission periods, the security parameter value ε indicates the probability that the difference of two consecutive noise determinations (or: estimates) for the CPNV does not exceed the WCNDV with a probability Pr of Pr=(1-ε).

Since a new calibration period (in which no quantum key transmission occurs) happens after every quantum transmission period, i.e. after a time span of LQ has passed after the previous calibration period, in this way a suitable worst-case estimation is performed. The worst-case noise drift value, WCNDV, is thus extracted in such a way that the security is maximized, as the worst case is assumed.

Clearly, in any specific calculation of the WCNDV, a time duration L' longer than LQ (L'>LQ) may be used, since stability over L' implies stability over LQ<L' in that case, or, put differently, choosing a security parameter value ε' for a time duration L' longer than LQ implies choosing the security parameter value ε for the time duration LQ (or less) as ε≤ε'. The time duration L' used in the calculation may, for example, be LQ+LC or the like.

In some advantageous embodiments, refinements, or variants of embodiments, the method further comprises a step of approximating the provided long-term noise statistics using an analytic function, and using said analytic function for calculating the worst-case noise drift value, WCNDV. Preferably, as the analytic function a Gaussian distribution is used.

In some advantageous embodiments, refinements, or variants of embodiments, providing the long-term noise statistics comprises measuring noise data over an extended period of time during a setup of the CV-QKD receiver at its intended location of operation and/or between its production and its start of operation. Preferably, the extended period of time is longer than 1 hour, preferably longer than 24 hours, more preferably longer than 48 hours. Advantageously, during the extended period of time, the CV-QKD receiver is placed in a controllable and stably controlled environment, in particular regarding temperature, vibrations, and/or the like.

During the calibration period, a local oscillator of the CV-QKD receiver may be controlled (or configured) to be online for some fraction x of the calibration period, and controlled (or configured) to be offline for the remaining fraction 1-x of the calibration period. Specifically, the local oscillator may be controlled (or configured) to be offline for measuring an electronic noise variance $\hat{\sigma}^2_{el}$ of the

CV-QKD receiver. The electronic noise variance $\hat{\sigma}^2_{el}$ typically is quite stable over time, as it mainly depends on the temperature.

The local oscillator may be controlled (or configured) to be online for measuring a combined noise variance $\hat{\sigma}^2_{comb}$, which thus comprises the electronic noise variance $\hat{\sigma}^2_{el}$ as well as a shot noise variance $\hat{\sigma}^2_{sh}$. Then, the interesting (since more strongly varying) shot noise variance $\hat{\sigma}^2_{sh}$ may be calculated as $\hat{\sigma}^2_{sh} = \hat{\sigma}^2_{comb} - \hat{\sigma}^2_{el}$. The calibration period noise value, CPNV $\hat{\sigma}^2[k]$, for a calibration period, CP $k$, is thus in some variants given by the shot noise variance $\hat{\sigma}^2_{sh}$ measured in this way. In general, the electronic noise variance $\hat{\sigma}^2_{el}$, the shot noise variance $\hat{\sigma}^2_{sh}$, the combined noise variance $\hat{\sigma}^2_{comb}$, or a quantity derived from any of these, may be used as the CPNV $\hat{\sigma}^2[k]$. Correspondingly, the TNEV and the WCNDV may be provided for the electronic noise variance $\hat{\sigma}^2_{el}$, the shot noise variance $\hat{\sigma}^2_{sh}$, the combined noise variance $\hat{\sigma}^2_{comb}$, or a quantity derived from any of these.

The electronic noise variance $\hat{\sigma}^2_{el}$ and the combined noise variance $\hat{\sigma}^2_{comb}$ are preferably measured while no quantum transmission is received, either because the measuring is performed at times when no quantum transmission occurs, or because a receiver-side switch blocks a (potentially) occurring quantum transmission.

The shot noise variance $\hat{\sigma}^2_{sh}$ (or, alternatively, the combined noise variance $\hat{\sigma}^2_{comb}$) are advantageously used for CV-QKD receiver calibration comprising a normalization of the excess noise during quantum key distribution. Normalizing the excess noise in this way essentially removes the effects of the CV-QKD receiver on the excess noise, so that it carries clearer information about the transmission itself, in particular about potential attacks. The normalized excess noise may be calculated and used as a measure that quantifies whether a transmission was secure or not, or as one of multiple such measures, including, for example, a modulation variance.

In some advantageous embodiments, refinements, or variants of embodiments, the total noise estimate value, TNEV, is based on a sum of the determined worst-case noise drift value, WCNDV, and the calibration period noise value, CPNV, or consists of said sum. Thus, in some embodiments, the total noise estimate value, TNEV $\hat{\sigma}'^2[k]$, may be calculated as

$$\hat{\sigma}'^2[k] = \hat{\sigma}^2[k] + \sigma_{\mathrm{wc}}^2$$

According to a second aspect, the present invention provides a continuous-variable quantum key distribution, CV-QKD, receiver configured for receiving a quantum key transmission, in which calibration periods with a duration LC and quantum transmission periods with a duration LQ alternate, comprising:

   a data storage module storing (or: configured to store) a worst-case noise drift value, WCNDV, of a noise metric;
   a noise measurement module configured to estimate in each calibration period a calibration period noise value, CPNV, for the noise metric for the respective following quantum transmission period based on (or: in) a current state of the CV-QKD receiver;
   a calculation module configured to calculate, for each quantum transmission period, a total noise estimate value, TNEV, to which both the determined worst-case noise drift value, WCNDV, and the calibration period noise value, CPNV, from the current calibration period (which serves to calibrate the CV-QKD receiver for the immediately following quantum transmission period) contribute, and to compute a secret key rate, SKR, using the calculated total noise estimate value, TNEV.

Although here, in the foregoing and in the following, some functions are described as being performed by modules, it shall be understood that this does not necessarily mean that such modules are provided as entities separate from one another. In cases where one or more modules are provided as software, the modules may be implemented by program code sections or program code snippets which may be distinct from one another but which may also be interwoven.

Similarly, in case where one or more modules are provided as hardware, the functions of one or more modules may be provided by one and the same hardware component, or the functions of one module or the functions of several modules may be distributed over several hardware components which need not necessarily correspond to the modules one-to-one. Thus, any apparatus, system, method and so on which exhibits all of the features and functions ascribed to a specific module shall be understood to comprise, or implement, said module.

In particular, it is a possibility that all modules are implemented by program code executed by a computing device, e.g. a server or a cloud computing platform.

The computing device may be realized as any device, or any means, for computing, in particular for executing a software, an app, or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC and/or any combination of the foregoing. The computing device may further comprise a working memory operatively connected to the at least one processing unit and/or a non-transitory memory operatively connected to the at least one processing unit and/or the working memory. The computing device may be implemented partially and/or completely in a local apparatus and/or partially and/or completely in a remote system such as by a cloud computing platform.

The data storage module may store long-term noise statistics. The calculation module may be further configured, for providing the worst-case noise drift value, WCNDV, to calculate the worst-case noise drift value, WCNDV, of the noise metric such that the difference between two consecutive noise estimates over a drift time with duration LQ exceeds the determined worst-case noise drift value, WCNDV, based on the provided long-term noise statistics with a probability of a given security parameter value ε or lower.

In some advantageous embodiments, refinements, or variants of embodiments, the CV-QKD receiver comprises an input interface configured to receive a desired security parameter value ε as an input, which is then used to calculate the worst-case noise drift value, WCNDV. The input interface may be a wireless and/or a wirebound interface, and may receive a signal including, or indicating, the desired security parameter value ε via any known communication protocol.

In some advantageous embodiments, refinements, or variants of embodiments, the CV-QKD receiver is further configured to perform privacy amplification based on the computed secret key rate, SKR.

According to a third aspect, the invention provides a computer program product comprising executable program code configured to, when executed, perform the method according to any embodiment of the first aspect of the present invention.

According to a fourth aspect, the invention provides a non-transient computer-readable data storage medium comprising executable program code configured to, when executed, perform the method according to any embodiment of the first aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to any embodiment of the first aspect of the present invention.

Depending on the degree of security that is desired by the user of the CV-QKD receiver (in particular expressed by the security parameter value $\varepsilon$), the present invention may allow to lengthen LQ with respect to LC in comparison with the prior art.

Further technical considerations, advantages as well as variants and refinements are presented in the following, in particular in the dependent claims as well as in the specification with respect to the drawings and the drawings themselves.

BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not to scale relative to each other. Like reference numerals designate corresponding similar parts. The numbering of method steps is done for the purpose of distinguishing between them and does not necessarily imply a temporal order, although a temporal order according to the numbering is possible. In particular, one or more method steps may be performed at the same time, overlapping one another and/or the like.

In the figures:

Fig. 1    shows schematic diagram of a quantum communications system comprising a CV-QKD receiver according to an embodiment of the present invention;

Fig. 2    shows a schematic block diagram of the continuous-variable quantum key distribution, CV-QKD, receiver according to an embodiment of the present invention;

Fig. 3    schematically illustrates the alternation of calibration periods and quantum transmission periods over time during quantum key transmission;

Fig. 4    shows a schematic graph for illustrating a preferred variant of the CV-QKD receiver of Fig. 2;

Fig. 5    shows a schematic flow diagram illustrating a method according to another embodiment present invention;

Fig. 6    shows a schematic block diagram of a computer program product according to yet another embodiment of the present invention; and

Fig. 7    shows a schematic block diagram illustrating a data storage medium according to still another embodiment of the present invention.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

DETAILED DESCRIPTION OF THE DRAWINGS

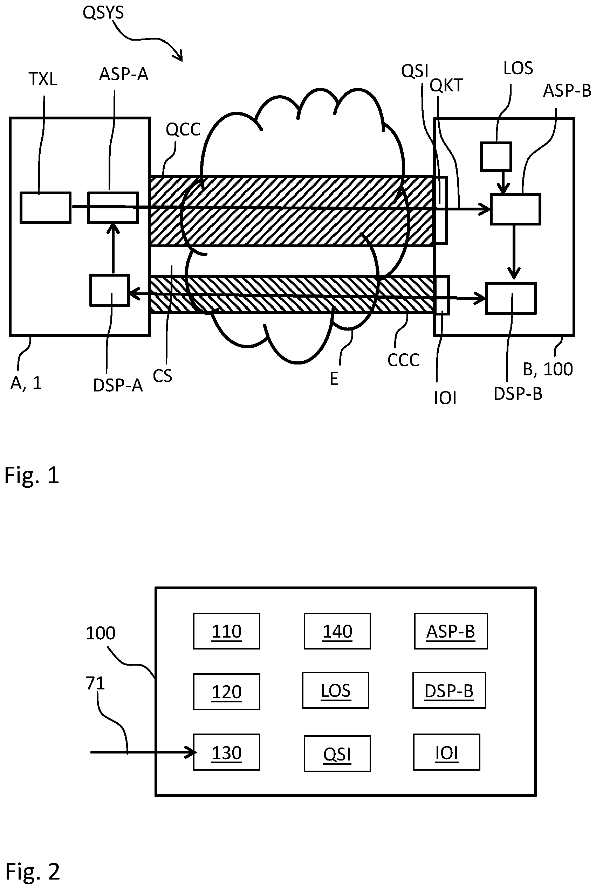

Fig. 1 shows a schematic diagram of a quantum communications system QSYS, with a transmitting entity A ("Alice"), using a quantum transmitter, specifically a continuous-variable quantum key distribution, CV-QKD, transmitter 1, and a receiving entity B ("Bob"), using a CV-QKD receiver 100 according to the present invention. The CV-QKD transmitter 1 and the CV-QKD receiver 100 can communicate over both an quantum communications channel QCC and a classical communications channel CCC. An attacker E is attempting to glean information from the communication; it is generally assumed that the attacker E can obtain information from the quantum communications channel QCC (it has to be considered as insecure, as the attacker E is not restricted in its ways of attack) and has full access to the classical communications channel CCC (which is authenticated only, as the attacker E can listen, but not modify its content in any way).

Using digital signal processing DSP-A on the transmitter-side, the transmitter 1 prepares a message (here for example: a random string) and uses analog signal processing ASP-A on the transmitter-side to superimpose the message onto a laser output of a transmitting laser TXL, thus creating a quantum key transmission QKT over the quantum communications channel QCC. The quantum key transmission QKT is received, at the receiver-side, by the CV-QKD receiver 100, first at a quantum signal interface QSI thereof, and then using analog signal processing ASP-B on the receiver-side with the help of a local oscillator LOS. On the result, digital signal processing DSP-B on the receiver-side is applied. Then, over the classical communications channel CCC, and in particular an input/output interface IOI of the CV-QKD receiver 100, further steps known in the field of QKD may be performed, such as reconciliation, parameter estimation, privacy amplification, transmission of synchronization information etc., using a classical signal CS.

Reconciliation and privacy amplification, or any steps before or after, may be performed according to any protocol or method known in the prior art, for example as known from "Jain et al.", "Laudenbach et al.", "van der Heide et al.", or "Leverrier et al.", the disclosures of all of which are hereby incorporated by reference.

Fig. 2 shows a schematic block diagram of the continuous-variable quantum key distribution, CV-QKD, receiver 100 according to an embodiment of the present invention. It shall be understood that the CV-QKD receiver 100 comprises all elements that are essential, and may comprise all other elements that are known in the prior art for CV-QKD receivers, for performing its function of receiving quantum signals, in particular quantum key transmissions QKT. In the following, only the elements that are regarded to be necessary, useful, or relevant to the present invention are mentioned explicitly, while it shall be understood that the CV-QKD receiver 100 may in addition comprise any number of additional elements, modules, or functions, be they implied or not. For example, the CV-QKD receiver 100 will have a power supply and so on.

The CV-QKD receiver 100 is configured for receiving a quantum key transmission QKT, in which calibration periods with a duration LC and quantum transmission periods with a duration LQ alternate.

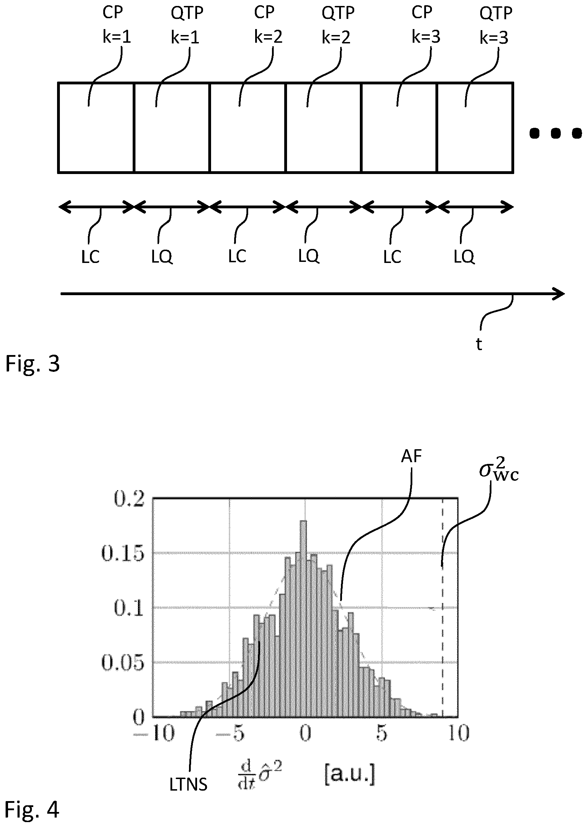

Fig. 3 schematically illustrates the alternation of calibration periods CP and quantum transmission periods QTP over time t, wherein each phase CP, QTP is numbered using a counter $k$. Each calibration period CP has a duration of LC, and each quantum transmission period QTP has a duration of LQ. LC and LQ may be the same or different.

The CV-QKD receiver 100 comprises a noise measurement module 110, which is configured to estimate, in each calibration period CP with counter value $k$, a calibration period noise value, CPNV, for the noise metric for the respective following quantum transmission period QTP (in the example of Fig. 1 also designated with the counter value $k$) based on a current state of the CV-QKD receiver. Without being restricted thereto, in the following an exemplary embodiment is used in which the calibration period noise value, CPNV, for a calibration period CP $k$ is given by a calibration period noise variance $\hat{\sigma}^2[k]$.

During each calibration period CP k, the local oscillator LOS may be controlled (for example by the noise measurement module 110, in the course of a measuring program or protocol executed by the noise measurement module 110) to be online for some fraction x of the calibration period, and offline for the remaining fraction 1-x of the calibration period. Specifically, the local oscillator LOS may be offline, while no quantum key transmission QKT is being received (typically by the ongoing quantum key transmission QKT being blocked, or shut off, at the side of the CV-QKD receiver 100, e.g. at or by its quantum signal interface QSI), for measuring an electronic noise variance $\hat{\sigma}_{\mathrm{el}}^2$ of the CV-QKD receiver 100. The local oscillator LOS may also be controlled to be online, while no quantum key transmission QKT is being received, for measuring a combined noise variance $\hat{\sigma}_{\mathrm{comb}}^2$. The noise measurement module 110 may then further be configured to calculate, as the calibration period noise value, CPNV, the shot noise variance $\hat{\sigma}_{\mathrm{sh}}^2$ as $\hat{\sigma}_{\mathrm{sh}}^2 = \hat{\sigma}_{\mathrm{comb}}^2 - \hat{\sigma}_{\mathrm{el}}^2$. As has been described in the foregoing, instead of the shot noise, other quantities (electronic noise, combined noise,...) can be used as the basis for calculation for the CPNV, the TNEV and/or the WCNDV.

The CV-QKD receiver 100 further comprises a data storage module 120 storing a worst-case noise drift value, WCNDV, of the noise metric. In the present example, the worst-case noise drift value, WCNDV, is, again, a noise variance $\sigma_{\mathrm{wc}}^2$.

The worst-case noise drift value, WCNDV $\sigma_{\mathrm{wc}}^2$, may have been simply stored in the data storage module 120, for example at the time of manufacture of the CV-QKD receiver 100. However, it is preferred that it is provided based on on-site measurements, i.e., at the CV-QKD receiver 100 being installed where and how it is going to be used for its intended purpose. In this way, the specifics of the environment of the CV-QKD receiver 100 are taken into account as well, such as ambient temperature, electronic field pollution from external sources, vibrations and the like.

Therefore, preferably, the noise measurement module 110 is also configured to provide the worst-case noise drift value, WCNDV $\sigma_{\mathrm{wc}}^2$, and to store it in the data storage module 120. In other words, the noise measurement module 110 may be configured to also perform a worst-case noise drift value, WCNDV, determining method (or: protocol), which can be part of a receiver pre-calibration. As part of such a WCNDV determining method, the noise measurement module 110 may be configured to measure noise data, at the CV-QKD receiver 100, over an extended period of time during a setup of the CV-QKD receiver 100 at its intended location of operation and/or between its production and its start of operation. The extended period of time may be longer than 1 hour, preferably longer than 24 hours, more preferably longer than 48 hours. The extended period of time may even be one or more weeks, or one or more months, or one or more years.

Fig. 4 shows a schematic graph for illustrating a preferred variant of such a WCNDV determining method. The horizontal axis indicates, in arbitrary units (a.u.), the changes in the calibration period noise value, CPNV $\hat{\sigma}^2$ [k], from the time point of its determination, to a time point that is later by the interval of LQ, i.e., the length of the (following) quantum transmission period, QTP k. The shown graph is a histogram, so that the vertical axis indicates the number of occurrences (which may be normalized to the total number of occurrences). The shown histogram thus indicates the long-term noise statistics LTNS.

During the calibration periods CP of a productive quantum key transmission, QKT, (i.e., during actual productive use of the CV-QKD receiver 100), the number of noise measurements, and thus the calibration rate, is limited by the desire to have as many and as long quantum transmission periods QTP as possible. Therefore, preferably, during the pre-calibration (i.e., during the worst-case noise drift value, WCNDV, determining method), the calibration rate (i.e. the rate at which measuring points for the long term noise statistics LTNS are produced) is higher than during productive use of the CV-QKD receiver 100, in order to improve said statistics.

The noise measurement module 110 is preferably further configured to, as part of the worst-case noise drift value, WCNDV, determining method, to use an analytic function AF for approximating the long-term noise statistics, LTNS, preferably a Gaussian distribution as shown in Fig. 4. Using an analytic function AF, in particular the Gaussian distribution, greatly simplifies the calculations.

For determining the worst-case noise drift value, WCNDV, a security parameter value ε needs to be set, indicating which statistically unlikely runaway values one is (still/barely) willing to tolerate. The security parameter value ε may be pre-set for the CV-QKD receiver 100, and may be stored, for example, in the noise measurement module 110 or in the data storage module 120.

In some variants, the CV-QKD receiver 100 may, however, comprise an input interface 130 configured to receive the security parameter value ε as an input. In this way, a user, or an external control signal 71 received by the CV-QKD receiver 100, may adapt the security parameter value ε, for example to distinguish between more and less important quantum key transmissions, QKT (more important: lower security parameter value ε). The input interface 130 may comprise a graphical user interface implemented by a handheld device and/or a touchscreen, a physical interface provided on a housing of the CV-QKD receiver 100, a wireless interface, and so on. The input interface 130 may also be the same as the input/output interface IOI for receiving the classical signal CS over the classical communications channel CCC, or it may be implemented separately.

In any case, the worst-case noise drift value, WCNDV $\sigma^2_{wc}$, is determined (i.e., calculated, or: selected) such that, according to the analytic function AF (here: Gaussian distribution), the probability that the calibration period noise value, CPNV, changes over a predefined time duration L more than the WCNDV $\sigma^2_{wc}$ is smaller than the security parameter value ε. In Fig. 4, the WCNDV $\sigma^2_{wc}$ is determined as indicated by the vertical dashed line, where the analytic function AF has decreased to a desired threshold value based on (or: represented by) the security parameter value ε.

The predefined time duration L is preferably set to be so large that it covers the entire quantum transmission period, QTP k, following the calibration period, CP k, in which the calibration period noise value, CPNV, was last determined. For example, L=LQ, or L=LQ+LC, or any value in between such as L=LQ+1/2LC, or L>LQ+LC.

In some variants of the CV-QKD receiver 100, the time durations LC and LQ may be adjustable by a user or an external control signal 71 received by the CV-QKD receiver 100, for example over the input interface 130. In this case, the worst-case noise drift value, WCNDV, may be automatically adapted, in particular in case the predefined duration L that had been used previously has become too small when compared to the new adjusted time durations LC or LQ. This may specifically happen when LQ or LC is increased.

The CV-QKD receiver 100 further comprises a calculation module 140 configured to calculate, for each quantum transmission period QTP $k$, a total noise estimate value, TNEV $\hat{\sigma}^2[k]$, to which both the determined WCNDV $\sigma^2_{wc}$ and the CPNV $\hat{\sigma}^2[k]$ from (or: determined in) the current (i.e., newest) calibration period CP $k$ contribute, and to compute a secret key rate, SKR, using the calculated total noise estimate value, TNEV. Preferably, the total noise estimate value, TNEV, is based on a sum of the determined worst-case noise drift value, WCNDV $\sigma^2_{wc}$, and the calibration period noise value, CPNV $\hat{\sigma}^2[k]$, or consists of said sum. Thus, in some embodiments, the total noise estimate value, TNEV $\hat{\sigma}^2$ [k], may be calculated as $\hat{\sigma}'^2[k] = \hat{\sigma}^2[k] + \sigma^2_{wc}$.

Using this total noise estimate value, TNEV, for the privacy amplification means that from each quantum transmission period, QTP $k$, a maximum of secrecy can be extracted while maintaining a security level according to the given (or selected) security parameter value ε.

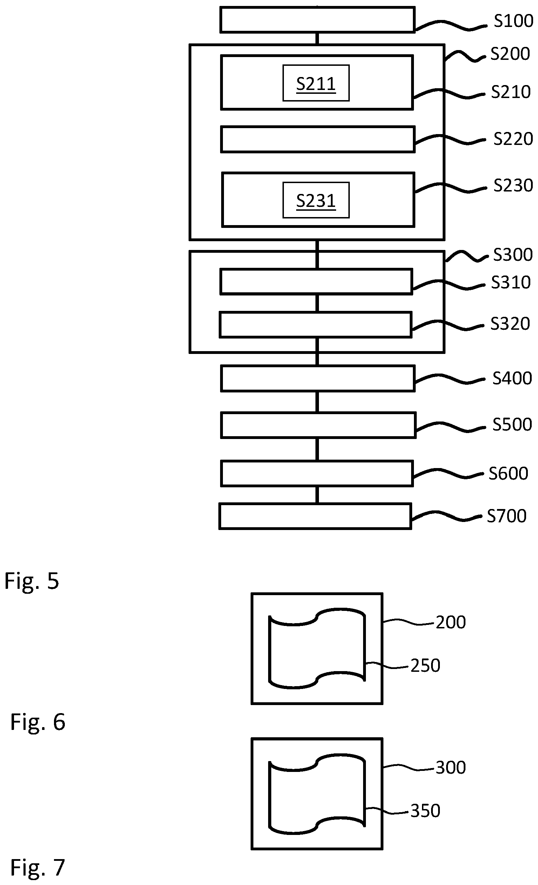

Fig. 5 shows a schematic flow diagram illustrating a method according to the first aspect of the present invention, i.e. a method of continuous-variable quantum key distribution, CV-QKD, receiver calibration. The method may in particular be performed on, or by, the CV-QKD receiver according to the present invention, and may be adapted, optimized, and refined, according to any of the variants, options, embodiments and refinements of embodiments that have been described for the CV-QKD receiver according to the invention and vice versa.

In a step S100, a CV-QKD receiver configured for receiving a quantum key transmission QKT, in which calibration periods CP with a duration LC and quantum transmission periods QTP with a duration LQ alternate, is provided, such as the CV-QKD receiver 100 as has been described in the foregoing.

In a step S200, a worst-case noise drift value, WCNDV, of a noise metric is provided. This may in particular be done as has been described in the foregoing with respect to the noise measurement module 110.

Specifically, in a step S210, long-term noise statistics LTNS for the provided CV-QKD receiver 100 may be provided, for example measured over an extended period of time in a step S211, and in a step S220, a desired security parameter value $\varepsilon$ may be provided, either as a fixed value, or as a value that may be changed according to a user input or an external control signal 71.

Then, in a step S230, the worst-case noise drift value, WCNDV, may be calculated such that the difference between two consecutive noise determinations over a drift time with duration LQ or less only exceeds the determined worst-case noise drift value, WCNDV, based on the provided long-term noise statistics LTNS with a probability of $\varepsilon$ or lower. To that end, in a step S231, an analytic function AF may be used to approximate the provided long-term noise statistics, LTNS, and the worst-case noise drift value, WCNDV, may then be calculated using said analytic function AF, which may in particular be a Gaussian distribution.

As has been described in the foregoing, once the worst-case noise drift value, WCNDV, has been calculated and stored (which may happen before any productive use of the CV-QKD receiver 100), it need not be calculated again if no change to the underlying fundamentals (e.g., the duration LQ or the duration LC) occurs. Thus, during productive use of the CV-QKD receiver 100, step S200 may simply comprise providing the worst-case noise drift value, WCNDV, by reading it out from a database such as the data storage module 120 described in the foregoing.

In a step S300, at least one calibration period CP is conducted (preferably a plurality of CPs, alternating with QTPs), in particular on the receiver-side, and in each calibration period CP $k$ a calibration period noise value, CPNV, for the noise metric based on a current state of the CV-QKD receiver 100 is determined, in particular measured and/or calculated, for example as has been described in the foregoing with respect to the noise measurement module 110. To that end, in a step S310, the local oscillator LOS of the CV-QKD receiver 100 may be controlled to be offline in order to measure an electronic noise variance $\hat{\sigma}^2_{\text{el}}$, and in a step S320, the local oscillator LOS may be controlled to be online in order to measure a combined noise variance $\hat{\sigma}^2_{\text{comb}}$, so that the calibration period noise value, CPNV $\hat{\sigma}^2[k]$, may be calculated in step S300 as

$$\hat{\sigma}^2[k] = \hat{\sigma}^2_{\text{sh}} = \hat{\sigma}^2_{\text{comb}} - \hat{\sigma}^2_{\text{el}}$$

. Alternatives have been described in the foregoing.

In a step S400, at least one quantum transmission period QTP is conducted (preferably a plurality of QTPs, alternating with CPs), in particular on the receiver-side, and for each quantum transmission period QTP $k$, a total noise estimate value, TNEV $\hat{\sigma}'^2[k]$ is calculated, to which both the worst-case noise drift value, WCNDV $\sigma^2_{\text{wc}}$, and the calibration period noise value, CPNV $\hat{\sigma}^2[k]$, contribute, for example as has been described in the foregoing with respect to the calculation module 140. In particular, the total noise estimate value, TNEV $\hat{\sigma}'^2[k]$ may be calculated as

$$\hat{\sigma}'^2[k] = \hat{\sigma}^2[k] + \sigma^2_{\text{wc}}$$

, when the basis for calculation is the shot noise. As has been described in the foregoing, other types of noise may be used as the basis for calculation as well.

In a step S500 a secret key rate, SKR, is calculated, using the TNEV $\hat{\sigma}'^2[k]$ calculated in step S400 and the transmission received in the quantum transmission period QTP according to any method or protocol known in the art. An excess noise may be measured, and the TNEV may be used to normalize that measured excess noise.

In a step S600, CV-QKD receiver-side privacy amplification is performed using the secret key rate, SKR, calculated in step S500. Privacy amplification may be performed using any method or protocol known in the art.

The secret key rate, SKR, may be calculated (and/or the privacy amplification performed) based on a single quantum transmission period, QTP, or over multiple quantum transmission periods, QTP.

In an optional step S700, the quantum key produced in the privacy amplification in step S600 may be used for encrypting a message and/or for decrypting a message previously encrypted with it.

Fig. 6 shows a schematic block diagram illustrating a computer program product 200 according to an embodiment of the third aspect of the present invention. The computer program product 200 comprises executable program code 250 configured to, when executed, perform the method according to any embodiment of the first aspect of the present invention, in particular as has been described with respect to the preceding figures.

Fig. 7 shows a schematic block diagram illustrating a non-transitory computer-readable data storage medium 300 according to an embodiment of the fourth aspect of the present invention. The data storage medium 300 comprises executable program code 350 configured to, when executed, perform the method according to any embodiment of the first aspect of the present invention, in particular as has been described with respect to the preceding figures.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated.

List of Reference Sings and Symbols

1     transmitter
100     CV-QKD receiver 100
110     noise measurement module
120     data storage module
130     input interface
140     calculation module
A     transmitting entity ("Alice")
ASP-A     analog signal processing on the transmitter-side
ASP-B     analog signal processing on the receiver-side
DSP-A     digital signal processing on the transmitter-side
DSP-B     digital signal processing on the receiver-side
B     receiving entity ("Bob")
CCC     classical communications channel
CP     calibration period
CS     classical signal
E     attacker ("Eve")
$\varepsilon$     security parameter value
IOI     input/output interface
LOS     local oscillator
QCC     quantum communications channel
QKT     quantum key transmission
QSI     quantum signal interface
QSYS     quantum communications system
QTP     quantum transmission period
$\hat{\sigma}^2[k]$     calibration period noise value, CPNV, for calibration period $k$
$\hat{\sigma}'^2[k]$     total noise estimate value, TNEV, of calibration period $k$

$\hat{\sigma}^2_{\mathrm{comb}}$     combined noise variance

$\hat{\sigma}^2_{\mathrm{el}}$     electronic noise variance

$\hat{\sigma}^2_{\mathrm{sh}}$     shot noise variance

$\sigma^2_{\mathrm{wc}}$     worst-case noise drift value, WCNDV

**Claims**

1. A method of continuous-variable quantum key distribution, CV-QKD, receiver calibration, comprising steps of:

   - providing (S100) a CV-QKD receiver (100) configured for receiving a quantum key transmission (QKT), in which calibration periods (CP) with a duration LC and quantum transmission periods (QTP) with a duration LQ alternate;
   - providing (S200) a worst-case noise drift value, WCNDV, of a noise metric;
   - determining (S300) in each calibration period (CP) a calibration period noise value, CPNV, for the noise metric based on a current state of the CV-QKD receiver (100);
   - calculating (S400), for each quantum transmission period (QTP), a total noise estimate value, TNEV, to which both the worst-case noise drift value, WCNDV, and the calibration period noise value, CPNV, from the current calibration period (CP) contribute, and
   - computing (S500) a secret key rate, SKR, using the calculated total noise estimate value, TNEV.

2. The method of claim 1, further comprising CV-QKD-receiver-side privacy amplification (S600) based on the computed secret key rate, SKR.

3. The method of claim 1 or claim 2, comprising further steps of:

   - providing (S210) long-term noise statistics (LTNS) for the provided CV-QKD receiver (100); and
   - providing (S220) a desired security parameter value $\varepsilon$; wherein providing (S200) the worst-case noise drift value, WCNDV, comprises calculating (S230) the worst-case noise drift value, WCNDV, such that the difference between two consecutive noise determinations over a drift time with duration LQ or less only exceeds the determined worst-case noise drift value, WCNDV, based on the provided long-term noise statistics with a probability of $\varepsilon$ or lower.

4. The method of claim 3, further comprising approximating (S231) the long-term noise statistics (LTNS) using an analytic function (AF), and using said analytic function (AF) for calculating (S230) the worst-case noise drift value, WCNDV.

5. The method of claim 4, wherein the analytic function (AF) is a Gaussian distribution.

6. The method of any of claims 3 to 5, wherein providing (S210) the long-term noise statistics (LTNS) comprises measuring (S211) noise data over an extended period of time during a setup of the CV-QKD receiver (100) at its intended location of operation and/or between its production and its start of operation.

7. The method of any of claim 6, wherein the extended period of time is longer than 1 hour, preferably longer than 24 hours, more preferably longer than 48 hours.

8. The method of any of claims 1 to 7, wherein a local oscillator (LOS) of the CV-QKD receiver (100) is controlled to be offline during at least a fraction of each calibration period (CP).

9. The method of any of claims 1 to 8, wherein the total noise estimate value, TNEV, is based on a sum of the determined worst-case noise drift value, WCNDV, and the calibration period noise value, CPNV, or consists of said sum.

10. A continuous-variable quantum key distribution, CV-QKD, receiver (100) configured for receiving a quantum key transmission (QKT), in which calibration periods (CP) with a duration LC and quantum transmission periods (QTP) with a duration LQ alternate, comprising:

   a data storage module (120) storing a worst-case noise drift value, WCNDV, of a noise metric;
   a noise measurement module (110) configured to estimate in each calibration period (CP) a calibration period noise value, CPNV, for the noise metric for the respective following quantum transmission period (QTP) based on a current state of the CV-QKD receiver;
   a calculation module (140) configured to calculate (S400), for each quantum transmission period (QTP), a total noise estimate value, TNEV, to which both the determined worst-case noise drift value, WCNDV, and the calibration period noise value, CPNV, from the current calibration period (CP) contribute, and to compute (S500) a secret key rate, SKR, using the calculated total noise estimate value, TNEV.

11. The CV-QKD receiver of claim 10,

   wherein the data storage module (120) additionally stores long-term noise statistics (LTNS); and wherein the calculation module (140) is further configured, for providing the worst-case noise drift value, WCNDV, to calculate (S230) the worst-case noise drift value, WCNDV, of the noise metric such that the difference between two consecutive noise estimates over a drift time with a predetermined duration, preferably the duration LQ, exceeds the determined worst-case noise drift value, WCNDV, based on the provided long-term noise statistics (LTNS) with a probability of a given security parameter value $\varepsilon$ or lower.

12. The CV-QKD receiver (100) of claim 11, further comprising an input interface (130) configured to receive the security parameter value $\varepsilon$ as an input.

13. The CV-QKD receiver of any of claims 10 to 12, further configured to perform privacy amplification (S600) based on the computed secret key rate, SKR.

14. A computer program product (200) comprising executable program code (250), configured to, when executed, perform the method of any of claims 1 to 9.

15. A non-transitory, computer-readable data storage medium (300) comprising executable program code (350), configured to, when executed, perform the method of any of claims 1 to 9.

Fig. 1

Fig. 2

Fig. 3

Fig. 4

S100

S200

S211 — S210

S220

S231 — S230

S300

S310

S320

S400

S500

S600

S700

Fig. 5

200

250

Fig. 6

300

350

Fig. 7

Europäisches
Patentamt

European
Patent Office

Office européen
des brevets

## EUROPEAN SEARCH REPORT

**Application Number**

EP 24 18 0024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOUGUET P ET AL: "Experimental demonstration of continuous-variable quantum key distribution over 80 km of standard telecom fiber", CLEO: 2013, THE OPTICAL SOCIETY, 9 June 2013 (2013-06-09), pages 1-2, XP032603385, [retrieved on 2014-06-12] * pages 1,2; figure 1 * | 1-15 | INV. H04L9/08 |
| X | DUAN HUANG ET AL: "Long-distance continuous-variable quantum key distribution by controlling excess noise", SCIENTIFIC REPORTS, vol. 6, no. 1, 13 January 2016 (2016-01-13), XP055707287, DOI: 10.1038/srep19201 * page 5; figures 2,4 * | 1,8,10, 14,15 | |
| X | WO 2020/177848 A1 (HUAWEI TECH DUESSELDORF GMBH [DE]) 10 September 2020 (2020-09-10) * pages 3,16, 22, 24, 28 * | 1,8-10, 14,15 | TECHNICAL FIELDS SEARCHED (IPC) |
| X | SEBASTIAN KLEIS ET AL: "Continuous variable quantum key distribution with a real local oscillator using simultaneous pilot signals", OPTICS LETTERS, vol. 42, no. 8, 15 April 2017 (2017-04-15) , page 1588, XP055647483, US ISSN: 0146-9592, DOI: 10.1364/OL.42.001588 * page 1590; figures 3,1 * | 1-15 | H04L |

The present search report has been drawn up for all claims

| Place of search | Date of completion of the search | Examiner |
|---|---|---|
| Munich | 11 November 2024 | Billet, Olivier |

EPO FORM 1503 03.82 (P04C01)

## ANNEX TO THE EUROPEAN SEARCH REPORT
## ON EUROPEAN PATENT APPLICATION NO.

EP 24 18 0024

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | Publication date | Patent family member(s) | Publication date |
|---|---|---|---|
| WO 2020177848 A1 | 10-09-2020 | CN 113302875 A<br>WO 2020177848 A1 | 24-08-2021<br>10-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. JAIN et al.** Practical continuous-variable quantum key distribution with composable security. *Nature Communications*, 12 August 2022, vol. 13, 4740, https://doi.org/10.1038/s41467-022-32161-y
- **F. LAUDENBACH et al.** Continuous-Variable Quantum Key Distribution with Gaussian Modulation - The Theory of Practical Implementations. *arXiv:1703.09278v3*, 10 May 2018
- **HEIDE et al.** Receiver Noise Stability Calibration for CV-QKD. *Optical Fiber Communications Conference and Exhibition (OFC), San Diego, CA, USA*, 2023, 1-3
- **A. LEVERRIER et al.** Finite-size analysis of continuous-variable quantum key distribution. *arXiv:1005.0339v2*, 04 May 2010